# EUROPEAN PATENT APPLICATION

(11) **EP 1 826 474 A1**
(43) Date of publication of application: **29.08.2007**
(21) Application number: 06425108.5
(22) Date of filing: 22.02.2006
(51) Int. Cl.: F21K 7/00, G03B 21/20, H01L 33/00, G02B 5/00, G02B 17/06

(54) **Optical projector with radial LED light source**

(71) Applicant: Optics Lite S.r.L., 23875 Osnago LC (IT)
(72) Inventor: Cariboni, Dante, 23900 Lecco (IT); Maiocchi, Stefano, 20060 Pessano con Bornago (MI) (IT)
(74) Representative: Coggi, Giorgio

(57) **Abstract**

An optical projector (1) is described, comprising a plurality of LED light sources (2) coupled with respective concave reflective surfaces (4), so that the light beams (I) emitted by the LEDs (2) are reflected by said concave reflective surfaces (4) to obtain reflected light beams (R) leaving the projector (1). The LEDs (2) are disposed so that their emission axes (E) are substantially radial with respect to a geometric axis (Y) of the projector and the concave reflective surfaces (4) are shaped so that the reflected light beams (R) are substantially parallel to the geometric axis (Y) of the projector (1).

## Description

The present invention refers to an optical projector with a LED light source, particularly suitable for illuminating rooms and objects.

Various types of optical projectors are known on the market which use light emitting diodes (LED) as their light source. The projectors are provided with a reflective surface to reflect the light emitted by the LEDs.

In order to increase the light efficiency, projectors are know to the art in which the LEDs are mounted in a matrix configuration on a printed circuit board. Each LED is situated in a respective concave, paraboloid, reflective surface. The LED is disposed so that its emission axis coincides with the optical axis of the reflective surface. In this manner the projector emits a plurality of parallel light beams directed according to the emission axis of the LEDs.

However, these projectors present the drawback of not allowing adequate mixing of the light beams coming from the various LEDs.

Furthermore, these projectors prove to be excessively bulky, especially axially, because of heat dissipation problems of the LEDs. As a result, these projectors are unlikely to be suitable for flush mounting in walls since the installer would be obliged to create housings with a too great depth, which are possible only in very thick walls.

Object of the present invention is to eliminate the drawbacks of the prior art, by providing an optical projector with a LED light source that is efficient and at the same time allows adequate mixing of the light beams coming from LED light sources.

Another object of the present invention is to provide such a projector that has a high power and at the same time a reduced axial size.

These objects are achieved according to the invention with the characteristics listed in appended independent claim 1.

Advantageous embodiments of the invention are apparent from the dependent claims.

The optical projector according to the invention comprises a plurality of LED light sources coupled to respective concave reflective surfaces so that the light beams emitted by the LEDs are reflected by said concave reflective surfaces to obtain light beams leaving said projector.

This configuration makes it possible to achieve a high light efficiency and at the same time to mix the light beams emitted by the LEDs and reflected by the reflective surfaces.

In the projector according to the invention, thanks to the radial arrangement of the light sources with respect to the reflector, the overall size of the finished product can be reduced. In fact, if the installed power is to be increased, it is sufficient to increase the diameter of the projector in order to increase the heat dissipation and not the height thereof (which is known to be the most critical installation parameter).

In this manner, the projector according to the invention proves to be particularly suitable to be flush mounted in walls, allowing the installers to make less deep holes or to house the product in thinner walls or in lower false ceilings with respect to the installation of classical reflectors with an axial light source.

Further characteristics of the invention will be made clearer by the detailed description that follows, referring to a purely exemplifying and therefore non-limiting embodiment thereof, illustrated in the appended drawings, in which:
Figure 1 is a perspective view of the optical projector with LED light source according to the invention, in which the case thereof has been omitted:
Figure 2 is a view like Figure 1, in which the LED supporting system has been omitted;
Figure 3 is a sectional view of Figure 2, partially broken off, illustrating the coupling of a LED to its reflective surface; and
Figure 4 is an axial sectional view of the optical projector with LED light source according to the invention, in its complete version.

The optical projector according to the invention, denoted as a whole with reference numeral 1, is described with the aid of the figures.

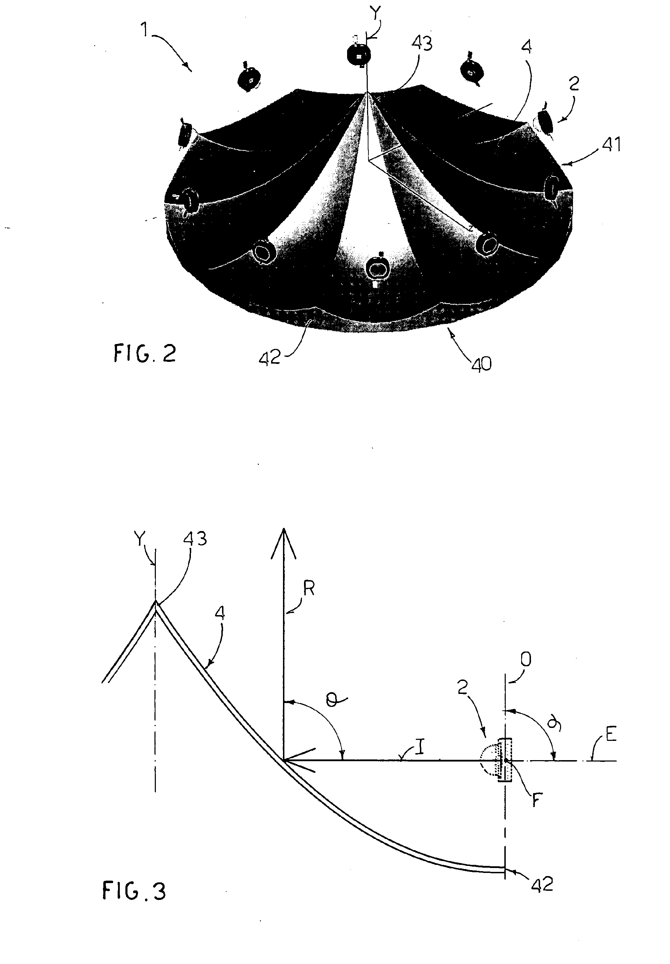

As shown in Figure 2 the projector 1 comprises a plurality of LEDs 2. Each LED is coupled to a respective concave reflective surface 4.

A shown better in Figure 3, the concave reflective surface 4 has a curved profile defined by a polynomial equation; for example said curved profile can be parabolic, elliptical or hyperbolic in shape. The LED 2 is positioned in the focus F of the curve of the profile of the reflective surface 4.

The LED 2 emits a light beam I, along an emission axis E coinciding with the geometric axis of the LED 2. The curve of the profile of the reflective surface 4 has an axis O coinciding with the optical axis of the reflective surface 4. The curve of the profile of the reflective surface 4 has an axis O coinciding with the optical axis of the reflective surface 4. The LED 2 is disposed so that an angle α, substantially between 80° and 100°, preferably 90°, is formed between its emission axis E and the optical axis O of the reflective surface 4. This angle α can be varied by inclining the LED 2, according to the curvature of the profile of the reflective surface 4.

In this manner, the light beam I emitted by the LED 2 strikes the reflective surface 4 generating a reflected light beam R which will exit the projector 1. An angle θ substantially between 80° and 100°, preferably 90°, is formed between the light beam I emitted by the LED 2 and the light beam R reflected by the reflective surface 4.

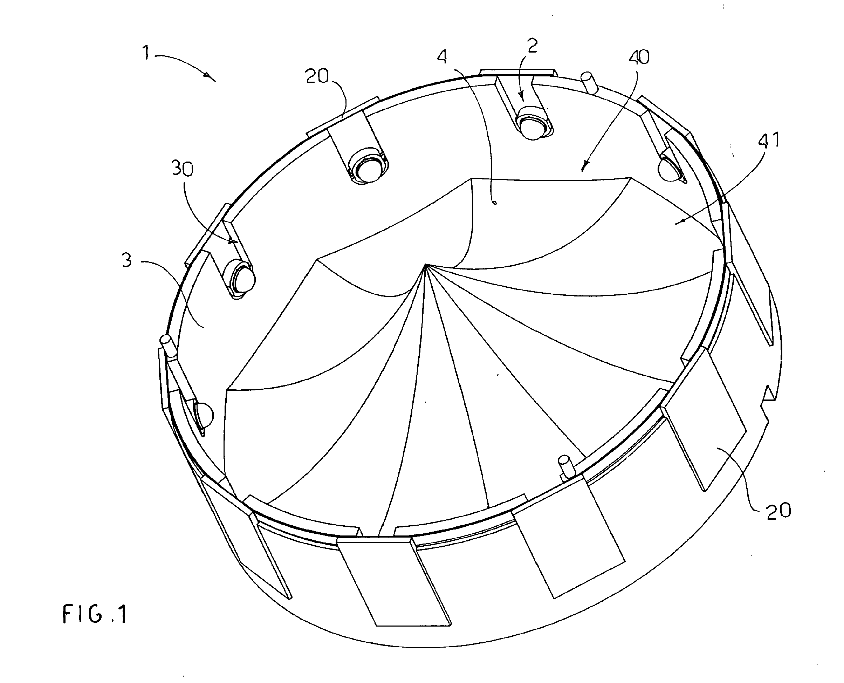

As shown better in Figures 1 and 2, the projector1 comprises a reflecting element 40 consisting of a plurality of circular sectors or segments 41, defining the reflective surfaces 4, distributed around an angle of 360°. Each reflective surface 4 is obtained as a solid of rotation of a curve (semi-parabola, semi-ellipse, hyperbola). By way of example, in Figures 1 and 2 ten reflective surfaces 4 evenly spaced over an angle of 360° degrees are shown. Therefore, each circular sector 41 subtends an angle of 36°.

However, it is obvious that both the number of LEDs 2 and the respective number of reflective surfaces 4 associated therewith can be varied according to requirements.

The reflecting element 40 has a circular bottom edge 42 and an apex 43 along its geometrical axis Y coinciding with the geometrical axis of the reflector 1. All the reflective surfaces 4 converge in the apex 43. Thus the reflecting element 4 is shaped substantially like a citrus-fruit squeezer.

Returning to Figure 3, it should be noted that the light beams I emitted by the LEDs 2 are radial with respect to the geometrical axis Y of the reflector, whilst the light beams R reflected by the reflective surfaces 4 are parallel to the geometrical axis Y of the reflector.

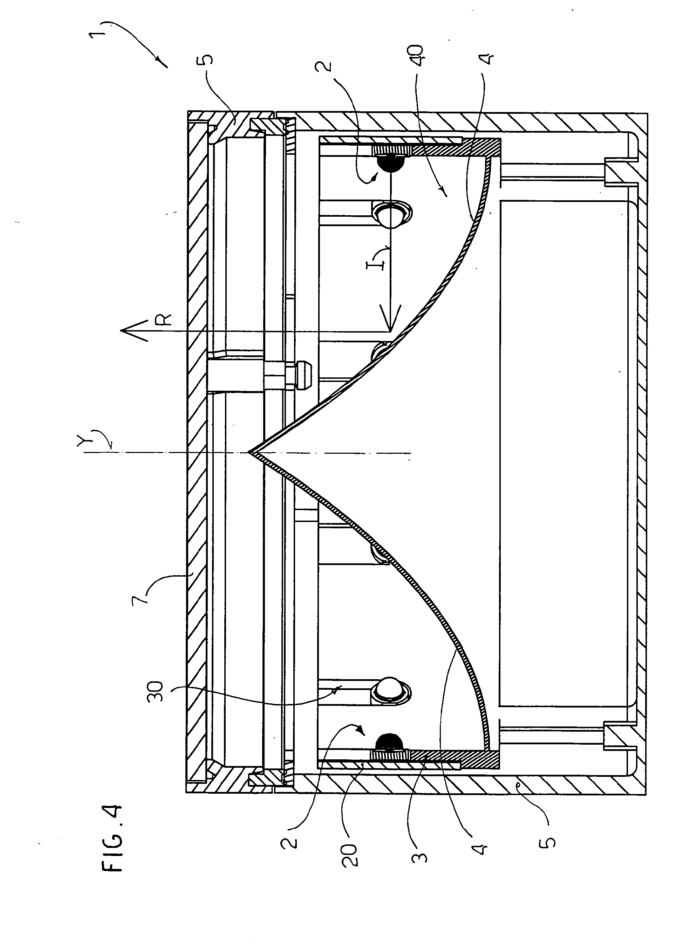

As shown in Figures 1 and 4, a cylindrical support 3 is disposed around the reflective element 40. The cylindrical support 3 has a plurality of windows 30 obtained by means of a U-shaped cut on the top edge thereof.

Each LED 2 is supported by a rectangular plate 20, such as, for example, a printed circuit board which controls the power supply to the LED 2. The LED supporting plate 20 is set into a respective seat formed in the rear wall of the cylindrical support 3, so that the LED 2 is situated in the respective window 30. In this manner each LED 2 is coupled to the respective reflective surface 4, as was explained previously with reference to Figure 3.

Clearly, as an alternative to the plate 20 which identifies the individual support of each LED 2, a common support for all the LEDs 2 can be made. This support could be a luminous band or bracelet to be wrapped on the outside of the cylindrical support 3 of the reflector. This bracelet fulfils the function of support for all the light sources 2 both as regards the mechanical aspect and as regards the electrical connection, in that a printed supply circuit is realized thereon.

As shown in Figure 4, the projector 1 comprises a case 5 able to contain the assembly consisting of the reflective element 40, of the support 3 and of the LEDs 2. The case 5 is closed by a cover 6 which supports a transparent sheet 7, such as glass, for example.

The glass sheet 7 is disposed on a plane at right angles to the geometric axis Y of the projector 1.

The light beams I emitted by the LEDs are therefore oriented radially with respect to the geometric axis Y of the projector 1. When the emitted beams I strike the respective reflective surfaces 4 they are reflected, generating reflected beams R parallel to the geometric axis Y of the projector. As a result the light beams R reflected by the reflecting element 40 strike the sheet of glass 7 at right angles, passing through it without undergoing any diffraction.

This projecting system, according to the invention, ensures an optimal lighting efficiency and also an excellent mixing of the light beams emitted by the LEDs 2 and reflected by the reflective element 40.

RGB (Red, Greeen, Blue) Full Color LEDs, commonly available on the market, can advantageously be used to obtain different light colours. It is obvious, however, that any type of LED source can be used, without any limitation to what is diagrammatically illustrated by way of example in the appended drawings.

Again advantageously, the reflective surface 4 of each circular sector 41 of the reflecting element 40 can be faceted, to obtain better mixing of the reflected light beams R.

Numerous changes and modifications of detail within the reach of a person skilled in the art can be made to the present embodiment of the invention without thereby departing from the scope of the invention as set forth in the appended claims.

## Claims

1. An optical projector (1) comprising a plurality of LED light sources (2) coupled with respective concave reflective surfaces (4) so that the light beams (I) emitted by the LEDs (2) are reflected by said concave reflective surfaces (4) to obtain reflected light beams (R) leaving said projector (1), **characterized in that**:
- said LEDs (2) are disposed so that their emission axes (E) are substantially radial with respect to a geometric axis (Y) of said projector, and
- said concave reflective surfaces (4) are shaped so that the reflected light beams (R) are substantially parallel to said geometric axis (Y) of the projector (1).

2. A projector (1) according to claim 1, **characterized in that** said concave reflective surfaces (4) have a curved profile defined by a polynomial equation, such as a parabolic, an elliptical or a hyperbolic profile.

3. A projector (1) according to claim 2, **characterized in that** each of said LEDs (2) is disposed to coincide with the focus (F) of said curved profile of the concave reflective surface (4) associated therewith.

4. A projector (1) according to claim 2 or 3, **characterized in that** each concave reflective surface (4) has an optical axis (O) substantially parallel to the geometric axis (Y) of the projector and each LED (2) is disposed so that its emission axis (E) forms an angle (α) with respect to said optical axis (O) of the respective reflective surface, wherein said angle (α) is between 80° and 100°, preferably 90°.

5. A projector (1) according to any one of the preceding claims, **characterized in that** said reflective surfaces (4) have such a shape that an angle (θ) of between 80° and 100°, preferably 90°, is formed between the light beam (I) emitted by each LED (2) and the light beam (R) reflected by the respective reflective surface (4).

6. A projector (1) according to any one of the preceding claims, **characterized in that** it comprises a reflective element (40) comprising a plurality of sectors or segments (41) forming said concave reflective surfaces (4), distributed around an angle of 360°, in which each concave reflective surface (4) is generated as a solid of rotation.

7. A projector (1) according to claim 6, **characterized in that** said reflecting element (40) has a substantially circular bottom edge (42) and an apex (43) disposed on said geometric axis (Y) of the projector, wherein said reflective surfaces (4) converge in said apex (43).

8. A projector (1) according to any one of the preceding claims, **characterized in that** it comprises a substantially cylindrical support (3) disposed around said reflective surfaces (4), so as to support said LEDs (2) in such a manner that their emission axes (E) are substantially radial with respect to said geometric axis (Y) of the projector.

9. A projector (1) according to claim 8, **characterized in that** said cylindrical support (3) comprises a plurality of windows (30) in which said LEDs (2) supported by supporting means (20) are disposed.

10. A projector (1) according to claim 9, **characterized in that** said LED supporting means comprise respective plates (20) housed in respective seats of said cylindrical support (3).

11. A projector (1) according to claim 9, **characterized in that** said LED supporting means comprise a band to wrap like a bracelet outside said cylindrical support (3), there being on said strap a printed circuit board to supply the LEDs.

12. A projector (1) according to any one of the preceding claims, **characterized in that** it comprises a case (5) provided with a cover (6) comprising a transparent sheet (7) disposed on a plane at right angles to the geometric axis (Y) of the projector and to the beams (R) reflected by the reflective surfaces (4).

13. A projector (1) according to any one of the preceding claims, **characterized in that** said LEDs (2) are of the RGB (Red, Green Blue) Full Color type, to obtain different light colours.

14. A projector (1) according to any one of the preceding claims **characterized in that** the reflective surface (4) of each LED is faceted, to obtain better mixing of the reflected light beams (R).
